# EUROPÄISCHE PATENTANMELDUNG

(11) **EP 2 314 493 A1**
(43) Veröffentlichungstag der Anmeldung: **27.04.2011**
(21) Anmeldenummer: 10178176.3
(22) Anmeldetag: 22.09.2010
(51) Int. Cl.: B61C 7/04, B60K 6/44

(54) **Schienenfahrzeughybridantrieb**

(30) Priorität: 20.10.2009 DE 102009045848
(71) Anmelder: ZF Friedrichshafen AG, 88038 Friedrichshafen (DE)
(72) Erfinder: Schneider, Harry Klaus, 88427 Bad Schussenried (DE)

(57) **Zusammenfassung**

Es wird ein Schienenfahrzeughybridantrieb (1) umfassend einen Verbrennungsmotor (2), ein Hauptgetriebe (3), eine erste Triebachse (4) mit einem Achswendegetriebe (5) und eine zweite Triebachse (6) mit einem Achsgetriebe (7) vorgeschlagen, wobei das Achswendegetriebe (5) ein schaltbares Stirnradgetriebe (11) und einen ersten Kegelradsatz (12) beinhaltet, und wobei das Achsgetriebe (7) einen zweiten Kegelradsatz (13) beinhaltet. Erfindungsgemäß ist an dem Achsgetriebe (7) der zweiten Triebachse (6) ein Hybridmotor (8) angeordnet.

## Beschreibung

Die vorliegende Erfindung betrifft einen Schienenfahrzeughybridantrieb gemäß dem Oberbegriff des Anspruches 1.

Eine Antriebsanordnung für ein Schienenfahrzeug ist aus der DE 198 27 580 A1 bekannt. Eine Verbrennungskraftmaschine treibt dabei beispielsweise über ein Schaltgetriebe, Gelenkwellen und ein Achsgetriebe bzw. Achswendegetriebe eine oder mehrere Fahrzeugachsen an. Bei einer gebräuchlichen Antriebsanordnung für Schienenfahrzeuge werden jeweils zwei Achsen über einen derartigen Antriebsstrang angetrieben, wobei die beiden Achsen einem gemeinsamen Drehgestellrahmen zugeordnet sind, an dem sie sich abstützen.

Der antriebsseitig an dem Drehgestellrahmen angeordneten ersten Achse ist dabei ein Achswendegetriebe zugeordnet, das einen Kegelradsatz und ein schaltbares Wendegetriebe umfasst. Auf der gegenüberliegenden Seite des im Wesentlichen symmetrisch aufgebauten Drehgestellrahmens ist die zweite Achse angeordnet. Die zweite Achse wird über eine Abtriebswelle des Achswendegetriebes der ersten Achse, über eine Verbindungsgelenkwelle und über ein Achsgetriebe angetrieben, wobei das Achsgetriebe nur einen Kegelradsatz und kein Wendegetriebe umfasst.

Eine derartige Antriebsanordnung soll nun als Hybridantriebsstrang ausgeführt werden. Hybridantriebe für Schienenfahrzeuge sind ebenfalls bekannt. Sie umfassen neben einer Verbrennungskraftmaschine einen weiteren Antrieb, der insbesondere bei einem Betrieb von Schienenfahrzeugen mit vielen Start-Stopp-Phasen der Rückgewinnung von Bremsenergie, der Reduzierung des Kraftstoffverbrauchs und der Verringerung von Abgasemissionen dient. Der weitere Antrieb neben dem Verbrennungsmotor wird hier auch Hybridmotor genannt und kann beispielsweise ein elektromotorischer oder ein hydrostatischer Antrieb sein. Der Hybridmotor umfasst in der Regel auch einen geeigneten Energiespeicher.

Ein Beispiel eines Schienenfahrzeughybridantriebes ist aus der DE 10 2006 043 227 A1 bekannt. Diese Schrift beschreibt einen Hybridantrieb, der neben einer Verbrennungskraftmaschine einen hydrostatischen Nebenantrieb aufweist. Der hydrostatische Nebenantrieb ist dabei im Antriebsstrang bzw. im Leistungsfluss nach einem Traktionsgetriebe und vor einem Wendegetriebe angeordnet. Diese Anordnung erfordert wegen des hydrostatischen Nebenantriebes einen vergrößerten Bauraum im Untergestell des Schienenfahrzeugs.

Es ist die Aufgabe der vorliegenden Erfindung eine eingangs beschriebene Antriebsanordnung für ein Schienenfahrzeug mit einem Hybridantrieb auszurüsten und dabei den benötigten Bauraum und den konstruktiven Aufwand gering zu halten.

Diese Aufgabe wird durch einen Schienenfahrzeughybridantrieb gemäß Patentanspruch 1 gelöst. Die abhängigen Ansprüche beinhalten bevorzugte Weiterbildungen der Erfindung.

Demnach wird ein Schienenfahrzeughybridantrieb mit einem Verbrennungsmotor, einem Hauptgetriebe, einer ersten Triebachse und einer zweiten Triebachse vorgeschlagen. Dabei ist der ersten Triebachse ein Achswendegetriebe zugeordnet, das ein schaltbares Stirnradgetriebe als Wendegetriebe und einen ersten Kegelradsatz umfasst. Der zweiten Triebachse ist ein Achsgetriebe mit einem zweiten Kegelradsatz zugeordnet.

Erfindungsgemäß ist dem Achsgetriebe der zweiten Triebachse ein Hybridmotor zugeordnet. Die Anordnung des Hybridmotors an dem Achsgetriebe der zweiten Triebachse bewirkt, dass der vorhandene Bauraum im Bereich des Antriebsstranges optimal ausgenutzt wird, weil das Achsgetriebe an der zweiten Triebachse einen kleineren Bauraum in Anspruch nimmt, als das Achswendegetriebe an der ersten Triebachse. Dadurch bleibt insbesondere in vertikaler Richtung in der Umgebung des Achsgetriebes Bauraum frei, welcher durch den Hybridmotor ausgenutzt wird. Dabei kann der Hybridmotor in Bezug auf die Kegelradwelle in beliebiger radialer Richtung angeordnet sein. Der Hybridmotor ist so mit dem Achsgetriebe wirkverbunden, dass das Schienenfahrzeug zumindest in bestimmten Betriebsphasen auch durch den Hybridmotor angetrieben werden kann.

Der Aufbau und die Funktion eines für den erfindungsgemäßen Antrieb geeigneten Achswendegetriebes ist bekannt und beispielsweise in der eingangs erwähnten DE 198 27 580 A1 beschrieben.

Bevorzugt weist das Achsgetriebe an der zweiten Achse zusammen mit dem Hybridmotor gleich große oder kleinere Abmessungen in vertikaler Richtung auf wie das Achswendegetriebe an der ersten Achse. Die vertikalen Abmessungen des Achswendegetriebes erfordern eine bestimmte Mindesthöhe des Untergestells an dem Schienenfahrzeug. Dadurch, dass das Achsgetriebe an der zweiten Achse zusammen mit dem Hybridmotor gleich große oder kleinere Abmessungen aufweist wie das bereits vorhandene Achswendegetriebe an der ersten Achse, wird durch die Hybridisierung kein zusätzlicher Bauraum in vertikaler Richtung notwendig und die Mindesthöhe des Untergestells bleibt gleich groß.

Vorzugsweise sind die erste und die zweite Triebachse an den beiden gegenüberliegenden Symmetrieseiten eines im Wesentlichen symmetrisch aufgebauten Drehgestellrahmens angeordnet. Der symmetrische Drehgestellrahmen ist dabei beispielsweise symmetrisch zu einer vertikal stehenden Symmetrieebene ausgebildet, wobei die Symmetrieebene senkrecht zur Längsachse des Schienenfahrzeuges steht. Die erste Triebachse ist beispielsweise in Fahrtrichtung vor der Symmetrieebene angeordnet und die zweite Triebachse dahinter.

Eine andere bevorzugte Ausführungsform der Erfindung sieht vor, dass der Hybridmotor als ein hydrostatischer Antrieb ausgebildet ist. Hydrostatische Antriebe eignen sich dank ihres robusten Aufbaues besonders gut für Schienenfahrzeuge, die aufgrund von Schienenstößen auf die Achsgetriebe hohen mechanischen Belastungen ausgesetzt sind.

Gemäß weiterer bevorzugter Ausführungen der Erfindung ist das Hauptgetriebe als zugkraftunterbrechungsbehaftetes Schaltgetriebe ausgebildet, wie es beispielsweise bei automatisierten Schaltgetrieben der Fall ist. Zur Überbrückung der Zugkraftunterbrechungen beim Schalten eines solchen Getriebes sind im Rahmen dieser Erfindung Steuerungsmittel vorgesehen, die den Hybridmotor während eines Schaltvorganges in dem Hauptgetriebe oder in dem Achswendegetriebe zum Einsatz bringen können.

Die beschriebenen Steuerungsmittel sind bevorzugt auch dazu vorgesehen, den Hybridmotor als Anfahrhilfe für das Schienenfahrzeug einzusetzen, wenn das Schienenfahrzeug nach einem Stopp wieder in Bewegung gesetzt wird. In vielen Einsatzbereichen von Schienenfahrzeugen, z.B. im Personennahverkehr, sind häufige Beschleunigungs- und Verzögerungsvorgänge von Haltestelle zu Haltestelle typisch. Gerade in solchen Einsatzbereichen bringen die beschriebenen Verwendungen eines Hybridmotors als Anfahrhilfe und zur Überbrückung von Zugkraftunterbrechungen große Vorteile im Hinblick auf Fahrkomfort und Energieverbrauch. Ein notwendiger Energiespeicher für den Hybridmotor kann an die jeweiligen Betriebsbedingungen optimal angepasst werden.

Der beschriebene Schienenfahrzeughybridantrieb kann sowohl bei Neufahrzeugen Verwendung finden, als auch bei bestehenden Schienenfahrzeugantrieben nachgerüstet werden.

Die Erfindung wird anhand eines Ausführungsbeispieles, das in der nachfolgenden Figur dargestellt ist, näher erläutert.

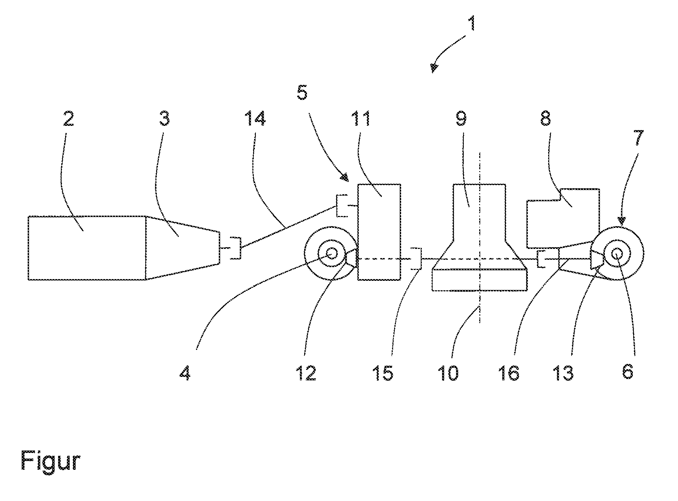

Die Figur zeigt den Aufbau eines erfindungsgemäßen Schienenfahrzeughybridantriebes in schematischer Darstellung.

Der erfindungsgemäße Schienenfahrzeughybridantrieb 1 umfasst einen Verbrennungsmotor 2 und in Richtung der Fahrzeuglängsachse direkt daran angeordnet ein Hauptgetriebe 3. Das Hauptgetriebe 3 ist ausgangsseitig über eine Gelenkwelle 15 mit einem Achswendegetriebe 5 verbunden. Das Achswendegetriebe 5 besteht im Wesentlichen aus einem Wendegetriebe 11, welches beispielsweise als Stirnradgetriebe ausgeführt ist, und aus einem ersten Kegelradsatz 12, der zumindest einen Teil des Antriebsdrehmomentes in eine erste Triebachse 4 einleitet.

Der erste Kegelradsatz 12 wird im Betrieb von einer ersten Getriebeausgangswelle aus dem Wendegetriebe 11 angetrieben. Über eine zweite Getriebeausgangswelle aus dem Wendegetriebe 11 wird über eine Gelenkwelle 14 ein Achsgetriebe 7 angetrieben. Das Achsgetriebe 7 umfasst einen zweiten Kegelradsatz 13, über den eine zweite Triebachse 6 angetrieben wird.

Sowohl die beiden Triebachsen 4 und 6, als auch das Achswendegetriebe 5, das Achsgetriebe 7 und die beiden Kegelradsätze 12 und 13 gehören zu dem Schienenfahrzeughybridantrieb 1. Die erste und die zweite Triebachse 4 und 6 sind quer zur Längsachse des Schienenfahrzeuges angeordnet.

Das Achsgetriebe 7 weist im Gegensatz zum Achswendegetriebe 5 kein Wendegetriebe und keinen Stirnradsatz auf. Stattdessen ist an dem Achsgetriebe 7 ein Hybridmotor 8 angeordnet und trieblich so mit dem Achsgetriebe 7 verbunden, dass das Schienenfahrzeug zumindest in bestimmten Betriebsphasen auch über den Hybridmotor 8 angetrieben werden kann. Dazu ist der Hybridmotor 8 mit dem Achsgetriebe 7 drehmomentübertragend verbindbar, beispielsweise über eine Stirnradstufe von einer Abtriebswelle des Hybridmotors 8 auf die Kegelradwelle 16 des Achsgetriebes 7.

Die Abmessungen des Hybridmotors 8 sind so bemessen, dass sie zumindest in vertikaler Richtung nicht über die anderen Teile des Schienenfahrzeughybridantriebes 1 hinausragen. Dadurch kann der herkömmliche Antriebsstrang mit einem Hybridmotor 8 ausgestattet werden, ohne dazu eine bisher bestehende Mindesthöhe des Antriebsstranges und damit des Unterbaus des Schienenfahrzeuges vergrößern zu müssen.

Das von dem Verbrennungsmotor 2 zur Verfügung gestellte Antriebsdrehmoment wird in dem Hauptgetriebe 3 mit einem bestimmten Verhältnis übersetzt und über die Gelenkwelle 15 dem Achswendegetriebe 11 zugeführt. Das Achswendegetriebe 5 erfüllt mehrere Funktionen. Erstens kann das Übersetzungsverhältnis im Achswendegetriebe 5 weiter verändert werden. Zweitens kann in dem Achswendegetriebe die Drehrichtung umgekehrt werden für Fahrtrichtungsänderungen. Drittens wird das Antriebsdrehmoment verteilt auf eine erste und eine zweite Ausgangswelle des Achswendegetriebes 5 und damit auf eine erste und eine zweite Triebachse 4 und 6 verteilt. Viertens wird das Drehmoment für die erste Triebachse 4 von einem ersten Kegelradsatz 12, der ebenfalls Teil des Achswendegetriebes 5 ist, in die erste Triebachse 4 eingeleitet.

Von der zweiten Ausgangswelle des Achswendegetriebes 5 wird das Antriebsdrehmoment über eine Gelenkwelle 14 und über das Achsgetriebe 7 mit dem Kegelradsatz 13 der zweiten Triebachse 6 zugeleitet. Der Hybridantrieb ermöglicht die Einleitung eines zusätzlichen Antriebsdrehmomentes in den Antriebsstrang während bestimmter Betriebsphasen, beispielsweise beim Anfahren oder während Schaltvorgängen im Hauptgetriebe 3 zur Überbrückung von Zugkraftunterbrechungen.

### Bezugszeichen

- 1: Schienenfahrzeughybridantrieb
- 2: Verbrennungsmotor
- 3: Hauptgetriebe
- 4: erste Triebachse
- 5: Achswendegetriebe
- 6: zweite Triebachse
- 7: Achsgetriebe
- 8: Hybridmotor
- 9: Drehgestellrahmen
- 10: Symmetrieebene
- 11: Stirnradgetriebe
- 12: Kegelradsatz
- 13: Kegelradsatz
- 14: Gelenkwelle
- 15: Gelenkwelle
- 16: Kegelradwelle

## Patentansprüche

1. Schienenfahrzeughybridantrieb (1) umfassend einen Verbrennungsmotor (2), ein Hauptgetriebe (3), eine erste Triebachse (4) mit einem Achswendegetriebe (5) und eine zweite Triebachse (6) mit einem Achsgetriebe (7), wobei das Achswendegetriebe (5) ein schaltbares Stirnradgetriebe (11) und einen ersten Kegelradsatz (12) beinhaltet, und wobei das Achsgetriebe (7) einen zweiten Kegelradsatz (13) beinhaltet, **dadurch gekennzeichnet, dass** ein Hybridmotor (8) an dem Achsgetriebe (7) der zweiten Triebachse (6) angeordnet ist.

2. Schienenfahrzeughybridantrieb (1) nach Anspruch 1, **dadurch gekennzeichnet, dass** das Achsgetriebe (7) zusammen mit dem Hybridmotor (8) höchstens gleich große Abmessungen in vertikaler Richtung aufweist, wie das Achswendegetriebe (4).

3. Schienenfahrzeughybridantrieb (1) nach Anspruch 1 oder 2, **dadurch gekennzeichnet, dass** die erste und die zweite Triebachse (4, 6) an gegenüberliegenden Symmetrieseiten einer Symmetrieebene (10) eines im wesentlichen zu der Symmetrieebene (10) symmetrischen Drehgestellrahmens (9) angeordnet sind.

4. Schienenfahrzeughybridantrieb (1) nach einem der vorgenannten Ansprüche, **dadurch gekennzeichnet, dass** der Hybridmotor (8) ein hydrostatischer Antrieb ist.

5. Schienenfahrzeughybridantrieb (1) nach einem der vorgenannten Ansprüche, **dadurch gekennzeichnet, dass** das Hauptgetriebe (3) als zugkraftunterbrechungsbehaftetes Schaltgetriebe ausgebildet ist.

6. Schienenfahrzeughybridantrieb (1) nach einem der vorgenannten Ansprüche, **dadurch gekennzeichnet, dass** Steuerungsmittel vorgesehen sind, die den Hybridmotor (8) als Anfahrhilfe nach dem Anhalten des Schienenfahrzeugs und/oder zur Überbrückung von Zugkraftunterbrechungen während eines Schaltvorganges in dem Hauptgetriebe (3) oder in dem Achswendegetriebe (4) zum Einsatz bringen.
